# EUROPÄISCHE PATENTANMELDUNG

(11) **EP 1 120 950 A1**
(43) Veröffentlichungstag der Anmeldung: **01.08.2001**
(21) Anmeldenummer: 00101380.4
(22) Anmeldetag: 24.01.2000
(51) Int. Cl.: H04M 3/493

(54) **Kommunikationssystem zur aufgabenabhängigen Bereitstellung von Informationen**

(71) Anmelder: Franke & Co. Verwaltungs KG, 14641 Wansdorf (DE)
(72) Erfinder: Franke, Christian, 14641 Wansdorf (DE)
(74) Vertreter: Körber, Martin, Dipl.-Phys.

(57) **Zusammenfassung**

Die vorliegende Erfindung betrifft ein Kommunikationssystem zur aufgabenabhängigen Bereitstellung von Informationen, mit einer Anzahl von Datenquellen (10-19) zum Bereitstellen Informationen verschiedener Datenformate, einer Empfangseinrichtung (1) zum Empfangen von Identifizierungsinformationen, die eine jeweilige den bereitzustellenden Informationen zugeordnete Aufgabe identifizieren, einer Verarbeitungseinrichtung (8) zum Abrufen von Informationen aus einer oder mehreren Datenquellen (10-19) abhängig von der einer empfangenen Identifizierungsinformation zugeorndeten Aufgabe, und einer Ausgabeeinrichtung (4) zum Ausgeben von die abgerufenen Informationen enthaltenen akustischen Sprachsignalen. Das erfindungsgemäße Kommunikationssystem ermöglicht auf einfache und effiziente Weise das Bereitstellen von Informationen abhängig von einer einem jeweiligen Kundenkreis zugeordneten spezifischen Aufgabe. Die Informationen können dabei flexibel in einem Bereich von starren vorgefertigten Informationen bis zu sehr individuellen Informationen beispielsweise durch einen Kundenbetreuer bereitgestellt werden.

## Beschreibung

Die vorliegende Erfindung betrifft ein Kommunikationssystem zur aufgabenabhängigen Bereitstellung von Informationen sowie eine tragbare Sendevorrichtung zum Erzeugen und Aussenden von Identifizierungsinformationen. Die Identifizierungsinformationen identifizieren eine jeweilige Aufgabe, die den durch ein erfindungsgemäßes Kommunikationssystem bereitzustellenden Informationen zugeordnet ist.

Die vorliegende Erfindung bezieht sich insbesondere auf die Sprachkommunikation, d.h. das Bereitstellen von Informationen in der Form akustischer Sprachsignale.

Im folgenden wird der Hintergrund der vorliegenden Erfindung näher erläutert. In der klassischen Telekommunikation werden im Bereich der Sprachkommunikation zwei grundlegend verschiedene Arten der Kommunikation unterschieden, nämlich die Verteilkommunikation, wie beispielsweise eine Radiosendung und die Dialogkommunikation, wie beispielsweise ein Telefongespräch zwischen zwei Personen.

Das Ziel der Verteilkommunikation ist, die gleiche Information an eine Vielzahl von Kommunikationspartnern zu verteilen. Der Empfänger verschafft sich allgemeine, nicht gezielt für ihn bestimmte Informationen. Dabei sendet ein Sender Informationen unkontrolliert in einen Übertragungskanal, den ein oder mehrere Empfänger für den Empfang der Informationen wählen können. Die Kanäle haben Adressen in Form von Kanalnummern. Die entsprechende Ziffernfolge muß der Empfänger als Adresse seines Verbindungswunsches an seinem Endgerät eingeben, um Informationen von der adressierten Gegenstelle empfangen zu können. Die Verbindung ist unidirektional und hat eine sehr geringe Verzögerungszeit, die nur von der Laufzeit der Signale abhängt. Die Übertragungsstrecke kann durch verschiedene Übertragungsmedien bereitgestellt werden, wie z.B. Kupferdraht, Koaxialkabel, Glasfaser oder Funkstrecken.

Das Ziel der Dialogkommunikation ist es, ein Gespräch zwischen zwei Teilnehmern zu ermöglichen. Für die Sprachkommunikation wird üblicherweise ein leitungsvermitteltes Telekommunikationsnetz, wie z.B. ein Festleitungs-Telefonnetz oder ein Mobilfunknetz oder eine Kombination davon verwendet. Bei der Dialogkommunikation werden zwischen zwei oder mehr Teilnehmern individuelle Informationen ausgetauscht. Derartige Telefongespräche werden im bekannten öffentlichen Telefonnetz, beispielsweise PSTN in Deutschland, im wesentlichen immer noch einzeln vermittelt und übertragen. Hierbei wird eine direkte Verbindung zwischen den zwei oder mehr Endgeräten hergestellt. Die Verbindung ist bidirektional, vollduplex und hat eine sehr geringe Verzögerungszeit, die nur von der Laufzeit der Signale abhängt. Diese Verbindung war früher eine physikalische elektrische Verbindung (Kupferdrahtleitung), die von einer Handvermittlung geschaltet wurde. Die Handvermittlung wurde im Laufe der Zeit durch elektromechanische Vermittlungsstellen, wie z.B. Drehwählern etc. ersetzt. In modernen digitalen Vermittlungsstellen existiert nur eine logische Verbindung über mehrere Vermittlungsstellen und über eine Vielzahl von unterschiedlichen Verbindungsmedien, wie Kupferkabel, Glasfaser, Koaxialkabel, Funkstrecken etc.. Die Benutzer nutzen die Verbindung exklusiv vom Zeitpunkt des Verbindungsaufbaus bis zum Abbau der Verbindung. Der Verbindungsaufbau erfolgt vom anrufenden Teilnehmer zum adressierten Teilnehmer. Dem Endgerät des adressierten Teilnehmers wird vom Telekommunikationsnetz-Betreiber eine Adresse in Form einer Ziffernfolge (Rufnummer) oder dergleichen zugeordnet. Diese Ziffernfolge muß der anrufende Teilnehmer als Adresse seines Verbindungswunsches an seinem Endgerät eingeben, um ein Gespräch mit dem Partner an der adressierten Gegenstelle führen zu können. Bei Festleitungs-Telefonnetzen ist der Ort des adressierten Teilnehmers fest. Eine derartige Architektur eines leitungsvermittelten Telefonnetzes macht es schwierig, neue Dienste, wie z.B. Einnummern-Dienste, lebenslange ortsunabhängige Rufnummern, Service-Rufnummern usw., in das Netz zu integrieren.

Als zukünftige Alternative für die Sprachkommunikation wird ein paketvermitteltes Telekommunikationsnetz diskutiert. Die Paketvermittlung ist ursprünglich eine Technik für die Datenübertragung, wobei die Daten in einzelne unabhängige Pakete verpackt werden. Jedes Paket erhält die Adresse des Endgerätes, an das die zu übertragenden Informationen versendet werden. Im Telekommunikationsnetz wird das Datenpaket von Gerät zu Gerät, z.B. durch Router (ein Router verbindet zwei oder mehr Netzwerke miteinander), Hubs (teilt ein Netzwerkkabel in eine Anzahl getrennter Leitungen auf, die jeweils mit einem Computer verbunden sind), Switches (die Datenpakete auf verschiedene Übertragungswege aufschalten), usw., weitergereicht, bis das Datenpaket sein Ziel erreicht. Dabei wird keine fest reservierte Verbindung, wie z.B. eine Leitung oder ein Kanal, verwendet, sondern die von einem Sender versendeten Datenpakete können verschiedene Wege nehmen, um zum selben Ziel zu gelangen. Der gewählte Weg ist unter anderem von der Last auf den verschiedenen Wegabschnitten abhängig und für den Sender nicht vorhersehbar.

Diese Art der Übertragung ist unidirektional und halbduplex, was zu Verzögerungen zwischen dem Senden und dem Empfangen der Datenpakete führt. Diese Verzögerungen können relativ lang sein, d.h. bis zu mehreren 100ms betragen. Ein derartiges Kommunikationsnetz liefert eine hocheffiziente Möglichkeit der Übertragung von Daten, die beim Empfänger in einen Speicher eingelesen und weiterverarbeitet werden können. Als übliche Übertragungsprotokolle haben sich beispielsweise im Internet die Internetprotokolle TCP/IP (transmission control protocol/internet protocol) durchgesetzt. Das Internetprotokoll IP liefert einen verbindungslosen ungesicherten Übertragungsdienst für die Datenpakete, d.h. leitet die Datenpakete von Gerät zu Gerät. Der Aufbau der Datenpakete und die Fehlerbehebung beim Übertragen wird den übergeordneten Protokollen wie z.B. TCP oder RTP (real time transport protocol) überlassen.

Wie oben erwähnt wurde, liefert das IP nur die Adressierungsmethode, um den Routern etc. das Weiterreichen der Datenpakete in einem oder mehreren Netzwerken, wie z.B. Internet, Wide Area Network (WAN) etc., bis zum Ziel zu ermöglichen. Die IP Adressen bestehen dabei aus zwei Teilen, nämlich dem Network Identifier und dem Host Identifier. Der Network Identifier wird durch eine zentrale Stelle vergeben und bezeichnet den im gesamten weltweiten Internet eindeutigen Adreßbereich eines Teilnetzes. Der Host Identifier wird vom lokalen Netzwerkadministrator vergeben und bezeichnet das einzelne Endgerät in einem Teilnetz.

Dieses Verfahren ermöglicht, die verschiedensten Endgeräte über unterschiedliche Netze zu verbinden, wodurch Daten aus unterschiedlichsten Quellen bei einem Endgerät zusammengeführt werden können, was dazu geführt hat, daß das TCP/IP das führende Protokoll für die Datenübertragung weltweit ist. Die Fortschritte beim Ausbau der Übertragungskapazität und neuere höhere Protokolle ermöglichen mittlerweile auch die Übertragung von Daten für zeitkritischere Anwendungen, z.B. die Übertragung von Sprachdaten oder den Sprachdialog über das Internet (Internet-Telefonie). Hierbei wird das verbindungslose paketvermittelnde Telekommunikatinsnetz für die Nachbildung von Verbindungen dergestalt verwendet, daß die Sprachübertragung den Dialogteilnehmern wie eine leitungsvermittelte Kommunikation erscheint.

Der Aufbau einer solchen simulierten Verbindung erfolgt vom anrufenden Teilnehmer zum adressierten Teilnehmer. Dem Endgerät des adressierten Teilnehmers hat die zentrale und die lokale Netzadministration eine Adresse in Form einer Zeichenfolge aus vier Zahlen von 0 bis 255 (IP-Adresse) zugeordnet. Eine Internetadresse enthält somit die aus vier Zahlen bestehende weltweite Netzadresse und die aus vier Zahlen bestehende lokale Adresse im lokalen Teilnetz. Die entsprechende Zeichenfolge muß der anrufende Teilnehmer als Adresse seines Verbindungswunsches an seinem Endgerät eingeben, um ein Gespräch mit dem Partner an der adressierten Gegenstelle führen zu können. Der Ort der Gegenstelle des adressierten Teilnehmers ist dabei im lokalen Teilnetz variabel, d.h. die Router im lokalen Netz können das Endgerät des adressierten Teilnehmers überall ansteuern. Dabei werden simulierte Verbindungen zwischen direkt am IP-Netz angeschlossenen Endgeräten, wie z.B. Computern, aufgebaut. Über entsprechende Schnittstellen ist es auch möglich, Telefongespräche zwischen normalen Telefonen über das paketvermittelte Telekommunikationsnetz zu führen. Dabei werden Umsetzer von einem Netz in das andere Netz verwendet (IP-Gateway und Gatekeeper), die die Umsetzung der Sprachcodierung, Handhabung der Datenpakete und vor allem die Umsetzung der Adressen vornehmen. Die Architektur des paketvermittelten Telekommunikationsnetzes erleichtert dabei die Einführung neuer Dienste. Das Routing der Datenpakete ist wesentlich flexibler als die Vermittlung von Leitungen bzw. reservierten Kanälen und kann leicht durch höhere Protokolle zur Implementierung neuer Dienste ergänzt werden.

Die oben skizzierten klassischen Formen der Telekommunikation, bei denen der anrufende Teilnehmer die Adresse des adressierten Teilnehmers zum Aufbau einer Verbindung eingibt, können den neuen Anforderungen der Informationsgesellschaft nicht mehr oder nicht in ausreichendem Maße genügen. Immer mehr Informationsnutzern sollen individuelle Informationen verschiedenen Ursprungs vermittelt werden. Dabei ist trotz der rasanten Zunahme der Informationsnachfrage über Datenendgeräte die Sprachkommunikation bei weitem die wichtigste Kommunikationsform. Für den Informationsnutzer ist die Sprache die natürlichste und schnellste Form des Dialogs.

Große Unternehmen oder Organisationen möchten ihren vielen Kunden Informationen bereitstellen, wobei jedem einzelnen Kunden genau die Information bereitgestellt und ausgegeben werden soll, die seinem aktuellen Problem entspricht. Die Verteilkommunikation kann zwar sehr viele Kunden gleichzeitig bzw. parallel informieren, kann aber keine individuell zugeschnittenen Inhalte liefern. Die Dialogkommunikation andererseits kann zwar individuelle Inhalte liefern, diese aber nicht mit vertretbarem Aufwand an die vielen Kunden verteilen.

Beispielsweise möchte eine Fluggesellschaft ihren 500.000 Kunden sowohl individuelle Informationen als auch allgemeingültige Informationen anbieten. Allgemeingültige Informationen sind mögliche Flugverbindungen, Sonderpreise oder Sonderflüge etc.. Individuelle Informationen sind Ticketbestellung und -stornierung, Buchungsbestätigungen und aktuelle Informationen über Verspätungen oder Flugplanänderungen, die nur für die jeweils betroffenen Kunden relevant sind. Die Kunden haben unterschiedliche Anforderungen in Abhängigkeit davon, ob sie Gelegenheitsflieger, regelmäßig reisende oder Teilnehmer eines Vielfliegerprogrammes sind. In Abhängigkeit von der Art des Kunden, dem momentanen Angebot der Fluggesellschaft und der Situation des Umfeldes, wie z.B. Wettersituation, Verspätungen, Streik, etc., müssen vielen individuellen Kunden jeweils spezielle adäquate Informationen bereitgestellt werden.

Bisher kann ein Informationsanbieter den Kunden nur eine Mischung aus Verteilkommunikation und Dialogkommunikation unter Verwendung verschiedener Adressen (Rufnummern oder Kanalnummern) liefern. Beispielsweise können im Fernsehen Netzinformationen über einen reservierten Fernsehkanal übertragen werden, oder allgemeingültige Informationen können über einen allgemeinen Fernsehkanal in einem festgelegten Zeitfenster geliefert werden. Zusätzlich kann der Informationsanbieter Telefonanschlüsse und Rufnummern für Anrufe bei einer bestimmten Person, z.B. einem Sachbearbeiter, Kundenbetreuer etc. oder für Anrufe bei einer Gruppe von Personen, wie z.B. Callcenteragenten etc. bereitstellen. Hierbei kann erst dann auf das individuelle Anliegen eines Anrufers eingegangen werden, wenn er einen Dialog mit einer anderen Person führt. Zur Automatisierung werden teilweise Telefonanschlüsse und Rufnummern für den Faxabruf, den Emailabruf, oder für das Abhören von automatischen Bandansagen verwendet. Weiterhin ist es bekannt, Verbindungen zu automatischen Sprachdialogsystemen mit Spracherkennung oder Sprachsynthese zu schalten.

Der Nachteil der skizzierten Kommunikationssysteme zur Bereitstellung von Informationen ist dabei, daß im wesentlichen entweder eine Dialogkommunikation einerseits oder eine Verteilkommunikation andererseits zur Verfügung steht. Abgestufte Mischformen zwischen diesen beiden grundlegenden Kommunikationsformen sind nicht möglich. Insbesondere ermöglicht keines der Kommunikationssysteme, den Kunden Informationen abhängig von deren Wünschen bzw. allgemein ausgedrückt abhängig von der jeweils definierten Aufgabe bereitzustellen.

Die Aufgabe der vorliegenden Erfindung ist somit, ein Kommunikationssystem zur aufgabenabhängigen Bereitstellung von Informationen bereitzustellen, das Benutzern auf einfache und effiziente Weise verschiedenartigste Informationen abhängig von einer jeweils vordefinierten Aufgabe bereitstellen kann.

Diese Aufgabe wird gelöst durch ein Kommunikationssystem zur aufgabenabhängigen Bereitstellung von Informationen gemäß Anspruch 1. Das erfindungsgemäße Kommunikationssystem umfaßt dabei eine Anzahl von Datenquellen zum Bereitstellen von Informationen verschiedener Datenformate, eine Empfangseinrichtung zum Empfangen von Identifizierungsinformationen, die eine jeweilige den bereitzustellenden Informationen zugeordnete Aufgabe identifizieren, eine Verarbeitungseinrichtung zum Abrufen von Informationen aus einer oder mehreren der Datenquellen abhängig von der einer empfangenen Identifizierungsinformation zugeordneten Aufgabe, und einer Ausgabeeinrichtung zum Ausgeben von die abgerufenen Informationen enthaltenden akustischen Sprachsignalen.

Die vorliegende Erfindung ermöglicht somit eine aufgabenorientierte Kommunikation mittels Spracherzeugung aus verschiedenen oder verteilten Datenquellen, wobei die Datenquellen Daten verschiedener Datenformate enthalten. Die vom Benutzer ohne vorherige Aufforderung, Dialog oder Interaktion mit dem System eingegebene Identifizierungsinformation identifiziert die jeweils zugeordnete Aufgabe, woraufhin die entsprechenden Informationen als akustische Sprachsignale beispielsweise über einen Lautsprecher, einen Telefonhörer, ein Mobilfunkgerät oder dergleichen auf einfache Weise ausgegeben werden. Die Ausgabe der Informationen als akustische Sprachsignale ist dabei die einfach zu implementierende Möglichkeit, Informationen bereitzustellen, da beispielsweise Telefone als Festgeräte oder Mobilfunkgeräte praktisch überall zur Verfügung stehen. Die Verwendung von Identifizierungsinformationen ermöglicht - im Gegensatz zur Verwendung reiner Adreßinformationen - das Bereitstellen individuell zugeschnittener Informationen in beliebigen Abstufungen zwischen einer reinen Verteilkommunikation und einer reinen Dialogkommunikation. Ein weiterer Vorteil ist, daß die Datenquellen an verschiedenen Orten angeordnet sein können, wodurch abhängig von der jeweils zugeordneten Aufgabe einem Benutzer unterschiedlichste und speziell zugeschnittene Informationen ausgegeben werden. Die Verwendung einer Aufgaben-Identifizierungsinformation, die jeweils nur einem einzigen oder einer Gruppe von bestimmten Benutzern zugeordnet ist, ermöglicht weiterhin eine einfache Programmierung und damit auch Umprogrammierung individueller Abläufe zur Informationsbereitstellung für Benutzer oder Gruppen von Benutzern.

Vorteilhafterweise sind die Verarbeitungseinrichtung, die Empfangseinrichtung, die Spracherzeugungseinrichtung und die verschiedenen Datenquellen zumindest teilweise durch ein Kommunikationsnetz zur paketvermittelten Übertragung von Informationen, wie z.B. das Internet, verbunden. Die Übertragung kann dabei auf der Basis des TCP/IP-Protokolls erfolgen. Hierdurch wird eine sehr flexible Bereitstellung der Informationen ermöglicht, wobei die Datenquellen an verschiedensten Orten angeordnet sein können. Die Verarbeitungseinrichtung ermittelt aufgabenabhängig die jeweiligen Adressen der Datenquellen, aus denen die Informationen abzurufen sind.

Vorteilhafterweise umfaßt das erfindungsgemäße Kommunikationssystem eine Sprachsignal-Erzeugungseinrichtung, die Sprachsignale aus den von den Datenquellen abgerufenen Informationen verschiedener Datenformate erzeugt und der Ausgabeeinrichtung zuführt, wobei die erzeugten Sprachsignale in der Ausgabeeinrichtung durch eine elektroakustische Umwandlung in akustische Sprachsignale umgewandelt und ausgegeben werden. Hierzu umfaßt die Ausgabeeinrichtung beispielsweise einen Lautsprecher oder dergleichen. In diesem Fall können die Sprachsignal-Erzeugungseinrichtungen und die Ausgabeeinrichtung vorteilhafterweise durch eine Telefonanlage verbunden sein, wobei die Ausgabeeinrichtung durch ein Endgerät der Telefonanlage gebildet ist. Alternativ sind die Sprachsignal-Erzeugungseinrichtung und die Ausgabeeinrichtung durch ein leitungsvermitteltes Telefonnetz verbunden, wobei die Ausgabeeinrichtung durch ein Endgerät des Telefonnetzes gebildet ist.

Für die Bereitstellung der Informationen durch die Datenquellen gibt es verschiedene Möglichkeiten. Die Informationen können von den Datenquellen als Sprachdaten, Bilddaten, Textdaten, usw. bereitgestellt werden. Die Sprachsignal-Erzeugungseinrichtung wandelt dann die verschiedenen Datenformate in eine einheitliche Ausgabe, d. h. Sprachsignale, um.

Vorteilhafterweise stellt zumindest eine Datenquelle die abzurufenden Informationen als Sprachdaten bereit. Dabei kann zumindest eine der Datenquellen eine Speichereinrichtung umfassen, in der die Sprachdaten in digitaler Form gespeichert sind. Zumindest eine der Datenquellen kann außerdem eine Empfangseinrichtung zum Empfang akustischer Sprachsignale von einem Sprecher und eine Einrichtung zur direkten Umwandlung der empfangenen akustischen Sprachsignale in digitale Sprachdaten umfassen. Der Sprecher ist beispielsweise ein Kundenbetreuer in einem Callcenter oder dergleichen. Weiterhin kann zumindest eine der Datenquellen eine Empfangseinrichtung zum Empfang akustischer Sprachsignale von einem Sprecher und eine Einrichtung zur indirekten Umwandlung der empfangenen akustischen Sprachsignale in digitale Sprachdaten auf der Basis von Parametern bezüglich des Sprachinhaltes und der Sprachgestaltung umfassen. In diesem Fall wird nicht das direkte Sprachsignal digitalisiert, sondern Parameter über den Sprachinhalt einerseits und die Sprachgestaltung, wie z.B. Tonlage, Betonung, Pausen, Prosodie usw., andererseits. Hierdurch kann die Sprachgestaltung künstlich verändert werden, z.B. eine männliche in eine weibliche Stimme oder dergleichen. Weiterhin kann die Menge der zu übertragenden Daten erheblich reduziert werden.

Vorteilhafterweise umfaßt zumindest eine der Datenquellen eine Speichereinrichtung, in der Bilddaten gespeichert sind, und eine Einrichtung zur Umwandlung der Bilddaten in Sprachdaten. Hierbei werden die Daten durch Analyse einer Bilddatei gewonnen, die beispielsweise ein Fax enthält, wobei beim Auslesen der Daten in der Sprachsignal-Erzeugungseinheit aus diesem Bild beispielsweise mittels OCR (optical character recognition, optische Buchstabenerkennung) ein Text generiert wird, der in Sprache umgewandelt wird.

Weiterhin stellt vorteilhafterweise zumindest eine Datenquelle die abzurufenden Informationen im Format ASCII-Text bereit. Dabei kann zumindest eine der Datenquellen eine Speichereinrichtung umfassen, in der die abzurufenden Informationen im Format ASCII-Text gespeichert sind. Weiterhin kann zumindest eine der Datenquellen Emaildaten im Format SMTD-Text bereitstellen. Zumindest eine der Datenquellen kann auch Fax-Daten bereitstellen. Eine weitere Möglichkeit ist, daß zumindest eine der Datenquellen Daten einer Website im Format HTML bereitstellt.

Vorteilhafterweise umfaßt das erfindungsgemäße Kommunikationssystem eine Überprüfungseinrichtung zur Überprüfung der von der Empfangseinrichtung empfangenen Identifizierungsinformationen in Bezug auf ihre Aufgabe. Dabei identifiziert die Überprüfungseinrichtung die jeweilige Aufgabe vorteilhafterweise auf der Basis der empfangenen Identifizierungsinformation und verifiziert die Aufgabe mittels eines von der Empfangseinrichtung empfangenen Bestätigungssignales. Das Bestätigungssignal wird von dem gleichen Benutzer eingegeben bzw. ausgelöst, der auch die Identifizierungsinformation ausgelöst hatte, wodurch ein Mißbrauch der Identifizierungsnummer vermieden werden kann, was insbesondere bei der Ausgabe von sensiblen oder geheimen Informationen vorteilhaft ist.

Alternativ ist die Empfangseinrichtung zum Empfangen der Identifizierungsinformation als akustisches Signal von einer tragbaren Sendevorrichtung und eines akustischen Sprachsignales von einem Benutzer ausgebildet, wobei das akustische Signal von der tragbaren Sendevorrichtung zusätzlich zur Identifizierungsinformation eine Identitätsinformation enthalten kann, die mit der Identität des Benutzers in Zusammenhang steht. Die Identitätsinformation kann auch in der Identifizierungsinformation enthalten sein. Die Identitätsinformation wird zur Identifizierung und Verifizierung der Identität des Benutzers verwendet, während die Identifizierungsinformation wie oben erläutert die bereitzustellenden Informationen identifiziert. Bei diesen Ausführungsbeispielen wird die Aufgaben-Identifizierungsinformation im Rahmen eines zweigeteilten akustischen Schlüssels eingegeben, wodurch eine hohe Sicherheit gegen Mißbrauch der bereitzustellenden Informationen gegeben ist.

Der erste Teil des akustischen Schlüssels wird von der tragbaren Sendevorrichtung in Form eines akustischen Signales ausgesendet, während der zweite Teil vom Benutzer beispielsweise als Kennwort oder Kennsatz gesprochen wird. Seitens des erfindungsgemäßen Kommunikationssystems kann der zweigeteilte akustische Schlüssel somit durch eine einzige Empfangseinrichtung, beispielsweise ein Mikrophon, empfangen werden, das sowohl das akustische Signal von der tragbaren Sendevorrichtung als auch das akustische Sprachsignal von dem Benutzer aufnimmt, und zur Identifizierung und Verifizierung der Berechtigung des Benutzers an eine entsprechende Überprüfungseinrichtung weiterleitet. Die tragbare Sendevorrichtung erzeugt daher ein akustisches Signal, das die den bereitzustellenden Informationen zugeordnete Aufgabe und die Identität des Benutzers identifiziert und überträgt das Signal auf akustischem Weg zur Empfangseinrichtung. Das Kommunikationssystem, d.h. die Prüfungseinrichtung identifiziert die Aufgabe und den Benutzer auf der Basis dieses akustischen Signals von der tragbaren Sendevorrichtung, woraufhin die Verifizierung der Identität des Benutzers durch das vom Benutzer gesprochene akustische Sprachsignal möglich wird.

Die Verwendung des zweigeteilten akustischen Schlüssels ermöglicht somit eine effiziente Überprüfung der Zugriffsberechtigung des jeweiligen Nutzers auf die bereitzustellenden Informationen. Dabei ist für die Implementierung an der Stelle, an der die Informationen bereitgestellt werden sollen, als Schnittstelle nur eine einfache Empfangseinrichtung beispielsweise in Form eines Mikrophons und eine einfache Ausgabeeinrichtung beispielsweise in Form eines Lautsprechers erforderlich. Die Implementierung ist daher an jedem Ort der Welt auf einfache und billige Weise möglich. An den meisten Stellen, an denen Informationen bereitgestellt werden sollen, ist bereits eine derartige Empfangs- und Ausgabeeinrichtung fest installiert, wie z.B. in einem Telefon-Festgerät, einem Mobiltelefon, einem Multi-Media-Computer usw.. An jeder anderen Stelle ist die Nachrüstung mit minimalem Aufwand und mit minimalen Kosten möglich. Die erfindungsgemäße tragbare Sendevorrichtung kann sehr klein und sehr leicht ausgebildet sein, beispielsweise als Chipkarte oder dergleichen, deren Größe einer Scheck- oder Kreditkarte entspricht.

Die erfindungsgemäße tragbare Sendevorrichtung zur Verwendung mit dem erfindungsgemäßen Kommunikationssystem zur aufgabenabhängigen Bereitstellung von Informationen umfaßt eine Speichereinrichtung zum Speichern der Identifizierungsinformation und ggf. zusätzlich der Identitätsinformation, eine Sendeeinrichtung zum Senden eines die Identifizierungsinformation und ggf. die Identitätsinformation repräsentierenden akustischen Signals, und eine Auslöseeinrichtung, die bei Betätigung durch den Benutzer das Senden des akustischen Signales auslöst.

Die Überprüfungseinrichtung erkennt die Identität des Benutzers auf der Basis der empfangenen Identitätsinformation von der tragbaren Sendevorrichtung und verifiziert diese mittels des empfangenen akustischen Sprachsignals von dem Benutzer. Dabei wird in der Regel das akustische Signal von der tragbaren Sendevorrichtung zuerst übersendet und von der Empfangseinrichtung empfangen, wobei der Benutzer danach das akustische Sprachsignal in Form eines Kennwortes oder dergleichen ausspricht. Dabei kann der Benutzer beispielsweise von der Empfangseinrichtung oder auch der Ausgabeeinrichtung des Kommunikationssystems über eine Anzeige oder eine Sprachausgabe zum Sprechen aufgefordert werden, oder er hat nach der Übertragung des akustischen Signales von der tragbaren Sendevorrichtung eine vorgegebene Zeitdauer, beispielsweise 20 Sekunden, um das erforderliche akustische Sprachsignal von sich zu geben.

Die in der Identifizierungsinformation enthaltene oder zusätzlich zu dieser im akustischen Signal vorgesehene Identitätsinformation von der tragbaren Sendevorrichtung steht mit der Identität des Benutzers in Zusammenhang, d.h. die Überprüfungseinrichtung ist in der Lage, die Identität des Benutzers mittels der Identitätsinformation festzustellen. Hierfür gibt es zwei generelle Möglichkeiten. Die erste Möglichkeit ist, daß die Identitätsinformation von der tragbaren Sendevorrichtung dem Benutzer direkt charakterisierende Daten enthält, die von der Überprüfungseinrichtung zur Überprüfung der Identität des Benutzers verwendet werden. Die direkt charakterisierenden Daten sind beispielsweise Sprecherparameter wie ein Audiogramm des erwarteten Sprachsignales (Kennwort, Kennsatz oder dergleichen), das von der Überprüfungseinrichtung nach Empfang des akustischen Sprachsignales von dem Benutzer direkt mit diesem Sprachsignal verglichen werden kann. In diesem Fall kann die Überprüfungseinrichtung sehr einfach aufgebaut sein. Die zweite Möglichkeit ist, daß die Identitätsinformation von der tragbaren Sendevorrichtung den Benutzer indirekt charakterisierende Daten enthält, mit denen aus einer Speichereinrichtung den Benutzer direkt charakterisierende Daten ausgelesen werden, die die Überprüfungseinrichtung zur Überprüfung der Identität des Benutzers verwendet. Die indirekt charakterisierenden Daten können beispielsweise eine Speicheradresse einer Datenbank oder dergleichen sein, mittels derer die Überprüfungseinrichtung auf eine Speichereinrichtung zugreifen kann, in der direkt charakterisierende Daten, wie z.B. Sprecherparameter, für die verschiedenen Benutzer gespeichert sind. Die aus der Speichereinrichtung ausgelesenen direkt charakterisierenden Daten werden dann mit dem empfangenen akustischen Sprachsignal von dem Benutzer verglichen. Bei positivem Überprüfungsergebnis wird der Zugriff für den Benutzer auf die bereitzustellenden Informationen freigegeben, d.h. die Aufgaben-Identifizierungsinformation wird zur Verarbeitungseinrichtung weitergeleitet, die die Informationen entsprechend der identifizierten Aufgabe aus den Datenquellen ausliest und über die Ausgabeeinrichtung dem Benutzer als Sprachsignal ausgibt.

Die den Benutzer direkt charakterisierenden Daten können beispielsweise die Stimme des Benutzers in Form eines Audiogramms oder dergleichen kennzeichnen. Eine andere Möglichkeit ist, daß die direkt charakterisierenden Daten lediglich das dem jeweiligen Benutzer zugeordnete Codewort charakterisieren, d.h. es wird lediglich überprüft, ob der Benutzer das richtige Codewort ausspricht, ohne daß ein Stimm- oder Frequenzvergleich stattfindet.

Vorteilhafterweise ist das akustische Ssignal von der tragbaren Sendevorrichtung zumindest teilweise verschlüsselt, wobei eine Entschlüsselungseinrichtung in der Überprüfungseinrichtung zum Entschlüsseln des verschlüsselten Teiles des empfangenen akustischen Signales vorgesehen ist. Hierdurch kann die Sicherheit der Zugriffskontrolle weiter erhöht werden.

Weiterhin ist es von Vorteil, wenn das akustische Signal von der tragbaren Sendevorrichtung zumindest teilweise gemäß einer der tragbaren Sendevorrichtung und der Überprüfungseinrichtung bekannten Regel geändert wird. Wenn die Identitätsinformation von der tragbaren Sendevorrichtung den Benutzer direkt charakterisierende Daten enthält, kann beispielsweise vom Benutzer jeden Tag oder bei jedem Vorgang ein anderes akustisches Sprachsignal verlangt werden. Falls die Identitätsinformation von der tragbaren Sendevorrichtung den Benutzer indirekt charakterisierende Daten enthält, kann das akustische Signal beispielsweise bei jedem Vorgang, d.h. bei jedem Informationsabruf, geändert werden oder das akustische Signal kann abhängig vom Datum und der jeweiligen Uhrzeit veränderbar sein. In diesem Fall muß in der tragbaren Sendevorrichtung eine Echtzeituhr vorhanden sein, wobei vom Benutzer immer das gleiche akustische Sprachsignal verlangt werden kann. Da dieses mittels der indirekt charakterisierenden Daten aus einer Speichereinrichtung der Überprüfungseinrichtung ausgelesen wird, braucht nur das akustische Signal verändert werden. Es ist jedoch auch möglich, zusätzlich hierzu vom Benutzer ein sich regelmäßig änderndes akustisches Sprachsignal zu verlangen.

Für den Fall, daß die Verbindung zwischen der Empfangseinrichtung und der Überprüfungseinrichtung des erfindungsgemäßen Kommunikationssystems keine exklusive Verbindung für eine spezielle Benutzergruppe ist, sondern von vielen verschiedenen Anwendern benutzt wird, wie z.B. in einem Festleitungs-Telefonnetz, Internet, Mobilfunksystem usw., so ist es von Vorteil, wenn das von der tragbaren Sendevorrichtung ausgesendete akustische Signal einen ersten und einen zweiten Teil umfaßt, wobei der erste Teil eine Adresseninformation enthält, die die Adresse des Systems enthält, auf das der Benutzer zugreifen will. Der erste Teil des akustischen Signals ist dabei eine allgemeine Adresseninformation, die von jedem Benutzer der berechtigten Gruppe verwendet wird. Beispielsweise kann dieser erste Teil des akustischen Signals eine Mehrfrequenz-Telefonnummer oder dergleichen sein. Erst der zweite Teil des akustischen Signals von der tragbaren Sendevorrichtung enthält die Identifizierungsinformation und ggf. die Identitätsinformation. Dieser zweite Teil kann beispielsweise verschlüsselt übertragen werden, wodurch die Sicherheit weiter erhöht wird. Die tragbare Sendevorrichtung umfaßt in diesem Fall eine Verschlüsselungseinrichtung zum Verschlüsseln dieses zweiten Teils des akustischen Signals. Weiterhin kann der zweite Teil des akustischen Signals eine veränderbare Sicherheitsinformation umfassen, die der Überprüfungseinrichtung ebenso wie die Veränderungsregel bekannt sein muß. Beispielsweise kann dabei in der tragbaren Sendevorrichtung ein Vorgangszähler vorgesehen sein, der jeden Sendevorgang zählt, wobei die Sicherheitsinformation auf der Basis der gezählten Sendevorgänge geändert wird. Da die Sendevorgänge in der Überprüfungseinrichtung ebenfalls gezählt werden können, kann auf diese einfache Weise eine effiziente Sicherung gewährleistet werden.

Die tragbare Sendevorrichtung und die Empfangseinrichtung und Überprüfungseinrichtung des Kommunikationssystems der vorliegenden Erfindung erlauben eine schnelle und sichere Kontrolle der Zugriffsberechtigungen von Benutzern auf einfache Art und Weise. Die Implementierung der erfindungsgemäßen Überprüfung ist sehr flexibel und billig, da lediglich eine einzige akustische Empfangseinrichtung, wie z.B. ein Mikrophon, an der Schnittstelle zwischen dem Benutzer und dem Kommunikationssystem implementiert werden muß, und die Überprüfungseinrichtung abhängig von der Anwendung mehr oder weniger weit entfernt sein kann. Die Ausgabeeinrichtung zur Ausgabe der nach Überprüfung der Zugriffsberechtigung freigegebenen und abgerufenen Informationen abhängig von der zugrundeliegenden Aufgabe kann über einen einfach zu implementierenden Lautsprecher installiert werden. Weiterhin können die Zugriffsberechtigungen der verschiedenen Benutzer auf einfache und flexible Weise verändert werden, indem beispielsweise der die Überprüfungseinrichtung enthaltende Computer einfach umprogrammiert wird oder die Berechtigung sich auf festgelegte Weise in Abhängigkeit von äußeren Umständen, wie z.B. Tageszeit, ändern. So kann beispielsweise an verschiedenen Tagen und zu bestimmten Zeiten ein berechtigter Benutzer auf unberechtigt geschaltet werden. Weiterhin kann beispielsweise beim Eintritt besonderer Ereignisse, beispielsweise Notfällen, Berechtigungen automatisch freigegeben werden. Die Steuerung der Zugriffsberechtigungen kann daher einfach und dynamisch verwaltet werden.

Alternativ zu der oben geschilderten tragbaren Sendevorrichtung kann die erfindungsgemäße Aufgaben-Identifizierungsinformation beispielsweise als Zahlen- und/oder Buchstabenkombination vom Benutzer über eine Tastatur eines Endgerätes eingetippt oder in ein Mikrophon gesprochen werden. Auch eine tragbare Sendevorrichtung, die die Aufgaben-Identifizierungsnummer erzeugt, kodiert und per Funk, optisch oder dergleichen an die Empfangseinrichtung des erfindungsgemäßen Kommunikationssystems überträgt, sind denkbar. Weiterhin kann die Aufgaben-Identifizierungsinformation beispielsweise an einem Endgerät, wie z.B. einem Computer, das die Empfangseinrichtung und die Ausgabeeinrichtung des erfindungsgemäßen Kommunikationssystems beinhaltet, bei einem Informationsabrufvorgang automatisch erzeugt und zur Verarbeitungseinrichtung übertragen werden.

In der folgenden Beschreibung sind bevorzugte Ausführungsbeispiele der vorliegenden Erfindung unter Bezug auf die beigefügten Zeichnungen näher erläutert, in denen zeigen
Figur 1 eine schematische Darstellung eines erfindungsgemäßen Kommunikationssystems,
Figur 2 eine schematische Darstellung eines Empfangssystems mit einer Empfangseinrichtung und einer Überprüfungseinrichtung als Teil eines erfindungsgemäßen Kommunikationssystems,
Figur 3 eine schematische Darstellung einer erfindungsgemäßen tragbaren Sendevorrichtung zur Verwendung mit dem erfindungsgemäßen Kommunikationssystem, und
Figur 4 eine schematische Darstellung einer Ausgestaltung des erfindungsgemäßen Kommunikationssystems als Telefon-Callcenter.

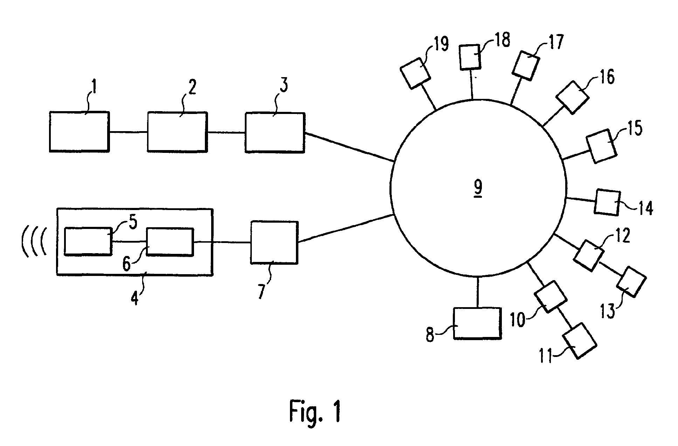

Figur 1 zeigt eine schematische Darstellung eines erfindungsgemäßen Kommunikationssystems zur aufgabenabhängigen Bereitstellung von Informationen. Das erfindungsgemäße Kommunikationssystem umfaßt eine Empfangseinrichtung 1 zum Empfangen von Identifizierungsinformationen, die eine jeweilige den bereitzustellenden Informationen zugeordnete Aufgabe identifizieren. Die Definition dieser Aufgabe wird beispielsweise von einem Anbieter vorgenommen, der verschiedenartige Informationen für den Anwender bereitstellen will. Dabei kann die vordefinierte Aufgabe vom Bereitstellen einer reinen Dialogkommunikation bis zu einer reinen Verteilkommunikation reichen und schließt dabei Mischformen zwischen Verteil- und Dialogkommunikation in beliebiger Variation ein.

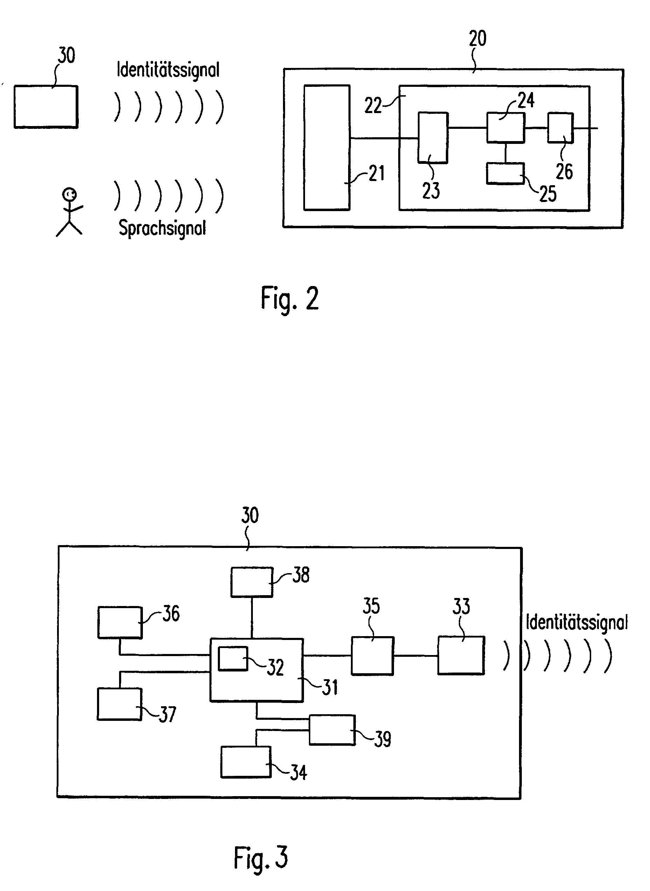

Im in Figur 1 dargestellten Beispiel wird die von der Empfangseinrichtung 1 empfangene Aufgaben-Identifizierungsinformation, die beispielsweise eine Nummernfolge, Buchstabenfolge oder eine Kombination davon sein kann, an eine Dekodiereinrichtung 2 weitergeleitet, die die empfangenen Identifizierungsinformationen dekodiert und an eine Prüfungseinrichtung 3 weiterleitet. Die Überprüfungseinrichtung 3 überprüft die empfangenen Identifizierungsinformationen auf ihre Zulässigkeit. In einem in Bezug auf die Figuren 2 und 3 näher erläuterten Ausführungsbeispiel kann die Überprüfungseinrichtung 3 beispielsweise die Identität des Benutzers überprüfen und durch ein zweites vom Benutzer einzugebendes Bestätigungssignal verifizieren, um beispielsweise eine Zugriffskontrolle bei sensiblen oder geheimen Informationen zu ermöglichen.

Die empfangene Aufgaben-Identifizierungsinformation wird von der Überprüfungseinrichtung 3 über ein Kommunikationsnetz 9 einer Verarbeitungseinrichtung 8 zugeleitet. Das Kommunikationsnetz 9 ist beispielsweise ein Kommunikationsnetz wie das Internet oder ein Wide Area Network, die eine paketvermittelte Übertragung von Informationen unterstützen. Die Aufgaben-Identifizierungsinformation enthält dabei die entsprechenden Adressinformationen, mittels derer das Kommunikationsnetz 9 die Aufgaben-Identifizierungsinformations zur Verarbeitungseinrichtung 8 weiterleitet. Das Kommunikationsnetz unterstützt z.B. das TCP/IP-Protokoll.

Die Verarbeitungseinrichtung 8 ruft Informationen abhängig von der Aufgabe, die den empfangenen Identifizierungsinformationen zugrundeliegt, aus einer oder mehreren Datenquellen 10-19 ab, die ebenfalls mit dem Kommunikationsnetz 9 verbunden sind. Die Aufgaben-Identifizierungsinformation wird sozusagen wie ein Schlüssel verwendet, der automatisch den Zugang zu einer bestimmten vordefinierten Gruppe von Datenquellen ermöglicht. Der Informationsanbieter, d.h. beispielsweise eine Fluggesellschaft, eine Bank, eine Versicherung oder dergleichen, legitimiert Informationsnutzer über individuelle Zuordnung einer Identifizierungsinformation. Dabei können verschiedene Klassen von Informationen vordefiniert werden, die einer jeweiligen Aufgabe entsprechen. Die jeweils zugeordnete Aufgabe kann dabei von einer Zuteilung und Bereitstellung von Informationen über eine reine Dialogkommunikation in beliebigen Stufen bis zu einer Informationsbereitstellung auf der Basis einer reinen Verteilkommunikation variieren. Beliebige Kombinationen sind hier denkbar. Weiterhin können die bereitzustellenden Informationen von verschiedenartigsten Datenquellen 10-19 beispielsweise als Sprachdaten, Bilddaten, Textdaten, usw. auf unterschiedlichste Art und Weise bereitgestellt werden.

Die bereitgestellten Informationen werden von der Verarbeitungseinrichtung 8 über das Kommunikationsnetz 9 einer Sprachsignal-Erzeugungseinrichtung 7 zugeleitet, die einheitliche normgerechte Sprachsignale aus den von den Datenquellen 10-19 abgerufenen Informationen erzeugt und einer Ausgabeeinrichtung 4 zuführt. Die Ausgabeeinrichtung 4 umfaßt eine Umwandlungseinrichtung, die die Sprachsignale von der Sprachsignal-Erzeugungseinrichtung 7 durch elektroakustische Umwandlung in akustische Sprachsignale umwandelt und einem Lautsprecher 5 zuführt, der die bereitgestellten Informationen dem Benutzer als akustische Sprachsignale ausgibt. Die Ausgabeeinrichtung 4 und die Empfangseinrichtung 1 sind in der Regel am gleichen Ort angeordnet. Die Empfangseinrichtung 1 kann beispielsweise das Mikrophon eines Telefonhörers sein und der Lautsprecher 5 der Ausgabeeinrichtung 4 kann beispielsweise der Lautsprecher des Telefonhörers sein. Die Umwandlungseinrichtung 6 ist in diesem Fall beispielsweise im Telefon-Endgerät implementiert, während die Dekodiereinrichtung 2, die Überprüfungseinrichtung 3 und die Sprachsignal-Erzeugungseinrichtung 7 beispielsweise in einem Telefoncomputer als Soft- oder Hardware installiert sein können. In einem derartigen Telefoncomputer könnte ebenfalls die Verarbeitungseinrichtung 8 implementiert sein.

Wie oben erwähnt wurde, stellen die Datenquellen 10-19 die dem jeweiligen Benutzer abhängig von der zugeordneten Aufgabe bereitzustellenden Informationen auf verschiedenste Art und Weise und in verschiedenen Formaten zur Verfügung. Die Datenquellen 10-14 stellen die abzurufenden Informationen beispielsweise als Sprachdaten bereit. Eine der Datenquellen kann dabei eine Empfangseinrichtung 11, beispielsweise ein Mikrophon zum Empfang akustischer Sprachsignale von einem Kundenbetreuer umfassen. Die empfangenen Sprachsignale werden von der Empfangseinrichtung 11 einer Umwandlungseinrichtung 10 zugeführt, die die empfangenen akustischen Sprachsignale auf der Basis von Parametern bezüglich des Sprachinhaltes und der Sprachgestaltung in digitale Sprachdaten umwandelt. Das heißt, die bereitzustellenden Informationen werden durch Auswertung der Ansage von einem Sprecher gewonnen, wobei nicht das direkte Sprachsignal digitalisiert wird, sondern Parameter über den Sprachinhalt einerseits und über die Sprachgestaltung (Tonlage, Betonung, Pausen, Prosodie) andererseits werden erzeugt. Damit ist es möglich, die Sprachgestaltung künstlich zu verändern, beispielsweise eine männliche in eine weibliche Stimme zu verwandeln und umgekehrt, oder auch die Parameter der Sprachgestaltung nicht zur Sprachsignal-Erzeugungseinrichtung 7 zu übertragen, sondern dort gespeicherte Parameter zu verwenden. Eine weitere Datenquelle umfaßt ebenfalls eine Empfangseinrichtung 13 zum Empfangen akustischer Sprachsignale beispielsweise von einem Kundenbetreuer. Die empfangenen Sprachsignale werden einer Umwandlungseinrichtung 12 zugeführt, die die empfangenen akustischen Sprachsignale direkt in digitale Sprachdaten umwandelt. Eine andere Datenquelle umfaßt eine Speichereinrichtung 14, in der digitalisierte Ansagen als Dateien in verschiedenen Formaten gespeichert sein können.

Eine andere Datenquelle umfaßt beispielsweise eine Speichereinrichtung 15, in der Bilddaten gespeichert sind. Beispielsweise können die Bilddaten aus einer Faxdaten enthaltenden Bilddatei bestehen, wobei die bereitzustellenden Informationen durch Analyse dieser Bilddaten mittels OCR in Textdaten umgewandelt werden, der wiederum in Sprachdaten umgewandelt wird.

In anderen Datenquellen werden Textdaten bereitgestellt, wie z.B. in einer Speichereinrichtung 16, in der Textdaten abgelegt sind. Die Speichereinrichtung 16 kann dabei Textdateien verschiedener Formate umfassen, die nach dem Abrufen von der Sprachsignal-Erzeugungseinrichtung 7 in digitalisierte Sprachsignale umgewandelt werden. Weitere Textdaten können von einer Website 17 über Email 18, oder über Fax 19 bereitgestellt werden.

Die Empfangseinrichtung 1 kann die Aufgaben-Identifizierungsinformation vom Benutzer beispielsweise als akustische Information, optische Information, Funkinformation, über Tastatur eingegebene Information usw. empfangen. Die Art der Implementierung ist dabei abhängig von der Sicherheitsrelevanz der abzurufenden Informationen und vom Ort, an dem die Empfangseinrichtung 1 und die Ausgabeeinrichtung 4 zu implementieren sind.

In den Figuren 2 und 3 ist eine bevorzugte Ausgestaltung der vorliegenden Erfindung gezeigt, bei der die Aufgaben-Identifizierungsinformation im Rahmen eines akustischen Signales von einer tragbaren Sendevorrichtung 30 erzeugt und ausgesendet wird. Das akustische Signal von der tragbaren Sendevorrichtung 30 enthält dabei innerhalb der oder zusätzlich zur Identifizierungsinformation eine Identitätsinformation, die mit der Identität des Benutzers in Zusammenhang steht.

Figur 2 zeigt den Empfangsteil des erfindungsgemäßen Kommunikationssystems als Empfangssystem 20, das eine Empfangseinrichtung 21, wie z.B. ein Mikrophon, und eine Überprüfungseinrichtung 22 umfaßt. Weiterhin ist in Figur 2 schematisch die tragbare Sendevorrichtung 30 gezeigt, die ein akustisches Signal zur Empfangseinrichtung 21 aussendet. Die Identität des Benutzers wird über das von der tragbaren Sendevorrichtung 30 ausgesendete akustische Signal festgestellt, während die Überprüfung und Verifizierung der Identität des Benutzers über ein von dem Benutzer auszusprechendes akustisches Sprachsignal überprüft und verifiziert wird. Das akustische Sprachsignal des Benutzers wird ebenfalls von der Empfangseinrichtung 21 empfangen und zur Überprüfungseinrichtung 22 über Leitungen oder drahtlos weitergeleitet. Abhängig von der jeweiligen Anwendung können die Empfangseinrichtung 21 und die Überprüfungseinrichtung 22 örtlich nahe aneinander angeordnet und beispielsweise in einem einzigen Gerät implementiert oder voneinander entfernt angeordnet sein. Die Verwendung des aus dem akustischen Signal und dem akustischen Sprachsignal bestehenden akustischen Schlüssels gewährleistet eine sehr hohe Sicherheit und einen weitgehenden Schutz gegen Mißbrauch.

Die Überprüfungseinrichtung 22 des Empfangssystems 20 umfaßt eine Steuereinrichtung 24, z.B. in Form eines digitalen Signalprozessors, in der die Identität des Benutzers auf der Basis des empfangenen akustischen Signals von der tragbaren Sendevorrichtung 30 erkannt und mittels des empfangenen akustischen Sprachsignales von dem Benutzer verifiziert wird. In der Regel wird zuerst das akustische Signal von der tragbaren Sendevorrichtung 30 an die Empfangeinrichtung 21 übertragen, woraufhin innerhalb eines bestimmten Zeitraumes oder nach Aufforderung über eine Sprachansage oder einen Display das akustische Sprachsignal von dem Benutzer ausgesprochen werden muß.

Durch das empfangene akustische Signal ist die Steuereinrichtung 24 der Überprüfungseinrichtung 22 in der Lage, den anfragenden Benutzer zu identifizieren, da das Identitätssignal eine Identitätsinformation enthält, die mit der Identität des Benutzers in Zusammenhang steht. Durch das akustische Sprachsignal vom Benutzer wird die festgestellte Identität dann verifiziert. Die Identitätsinformation, die den Benutzer identifiziert, kann z.B. in der Aufgaben-Identifizierungsinformation enthalten oder auch eine zusätzliche Information sein. Bei positiver Verifizierung wird der Zugriff beispielsweise mittels einer Freigabeeinrichtung 26 freigeschaltet, die Identifizierungsinformation wird zur Verarbeitungseinrichtung weitergeleitet und die entsprechenden Informationen können von den jeweiligen Datenquellen abhängig von der Aufgabe, die dem Benutzer zugeordnet ist, abgerufen werden. Die Identitätsinformation, die mit dem akustischen Signal von der tragbaren Sendevorrichtung 30 übertragen wird, kann entweder den Benutzer direkt charakterisierende Daten oder den Benutzer indirekt charakterisierende Daten enthalten.

Im ersten Fall, d.h. wenn die Identitätsinformation den Benutzer direkt charakterisierende Daten enthält, so vergleicht die Steuereinrichtung 24 diese den Benutzer direkt charakterisierende Daten direkt mit dem akustischen Sprachsignal vom Benutzer. Die Identitätsinformation enthält somit bereits die Information, die als akustisches Sprachsignal vom Benutzer erwartet wird, wie beispielsweise das Kennwort oder die Sprecherparameter für eine Frequenzanalyse oder dergleichen oder eine Kombination der beiden.

Alternativ enthält die Identitätsinformation von der tragbaren Sendevorrichtung 30 den Benutzer indirekt charakterisierende Daten, d.h. Daten, die zwar mit der Identität des Benutzers in Zusammenhang stehen, jedoch nicht direkt mit dem akustischen Sprachsignal vom Benutzer verglichen werden können. Diese den Benutzer indirekt charakterisierenden Daten können beispielsweise eine Speicheradresse enthalten, mittels der die Steuereinrichtung 24 der Überprüfungseinrichtung 22 auf eine Speichereinrichtung 25 zugreifen kann. Die Speichereinrichtung 25 enthält in diesem Fall eine Datenbank mit die berechtigten Benutzer direkt charakterisierenden Daten. Bei Empfang des akustischen Signals von der tragbaren Sendevorrichtung 30 mit den Benutzer indirekt charakterisierenden Daten liest die Steuereinrichtung 24 den Benutzer direkt charakterisierende Daten aus der Speichereinrichtung 25 mittels der empfangenen den Benutzer indirekt charakterisierenden Daten aus. Daraufhin wird die Identität des Benutzers durch einen Vergleich der dem Benutzer direkt charakterisierenden Daten mit dem empfangenen akustischen Sprachsignal vom Benutzer verifiziert. In beiden genannten Fällen kennzeichnen die den Benutzer direkt charakterisierende Daten die Stimme des Benutzers, beispielsweise eine Frequenzanalyse eines bestimmten Kennwortes des Benutzers, Parameter einer Grundfrequenzanalyse, einer Formantenanalyse oder dergleichen.

Zur Erhöhung der Sicherheit ist das akustische Signal von der tragbaren Sendevorrichtung 30 zumindest teilweise verschlüsselt, wobei vor die Steuereinrichtung 24 der Überprüfungseinrichtung 22 eine Entschlüsselungseinrichtung 23 geschaltet ist, die den verschlüsselten Teil des empfangenen akustischen Signals entschlüsselt. Die Sicherheit kann weiter erhöht werden, wenn das akustische Signal oder zumindest ein Teil des akustischen Signals von der tragbaren Sendevorrichtung 30 gemäß einer der tragbaren Sendevorrichtung 30 und der Überprüfungseinrichtung 22 bekannten Regel geändert wird. Die Änderung kann dabei beispielsweise zeitlich regelmäßig durchgeführt werden. Eine andere Möglichkeit ist, die Veränderung des akustischen Signals in Abhängigkeit von der jeweiligen Echtzeit, wobei in diesem Fall ein Echtzeitgeber in der Sendevorrichtung 30 vorgesehen sein muß. Eine bevorzugte Möglichkeit ist jedoch das Vorsehen eines Vorgangszählers sowohl in der tragbaren Sendevorrichtung 30 als auch in der Überprüfungseinrichtung 22, wobei das akustische Signal sich auf der Basis der gezählten Sendevorgänge ändert.

Figur 3 zeigt schematisch eine erfindungsgemäße tragbare Sendevorrichtung 30 zur Verwendung mit einem erfindungsgemäßen Kommunikationssystem 1. Die erfindungsgemäße tragbare Sendevorrichtung 30 umfaßt eine zentrale Steuereinrichtung 31, wie z.B. einen Mikrocontroller, die einen Speicher 32 umfaßt. Weiterhin umfaßt die Sendevorrichtung 30 eine Auslöseeinrichtung 34 zum Auslösen der Erzeugung und des Aussendens des akustischen Signals. Die Auslöseeinrichtung 34 ist im in Figur 3 gezeigten Beispiel mit einem Vorgangszähler 39 verbunden, der die Sendevorgänge zählt. Weiterhin vorgesehen sind eine mit der Steuereinrichtung 31 verbundene Signalerzeugungseinrichtung 35 und ein separater Speicher 38. Die von der Signalerzeugungseinrichtung 35 erzeugten Signale werden von einer Sendeeinrichtung 13 als das akustische Signal ausgesendet. Die Sendevorrichtung 30 umfaßt zusätzlich eine Takterzeugungsvorrichtung 36, beispielsweise in Form eines Quarzes, und eine Spannungsversorgungseinrichtung 37 wie z.B. eine Batterie.

Es ist hervorzuheben, daß die in Figur 3 gezeigte Sendevorrichtung 30 ein bevorzugtes Ausführungsbeispiel der erfindungsgemäßen tragbaren Sendevorrichtung ist, die eine relativ hohe Komplexität und Sicherheit bietet. In der einfachsten Form einer tragbaren Sendevorrichtung gemäß der vorliegenden Erfindung muß diese lediglich eine Steuereinrichtung mit entsprechendem Speicher, eine Auslöseeinrichtung und eine Sendeeinrichtung umfassen. In der Speichereinrichtung ist die Aufgaben-Identifizierungsinformation und ggf. die mit der Identität des Benutzers in Zusammenhang stehende Identitätsinformation gespeichert, die bei Auslösen der Auslöseeinrichtung durch den Benutzer über die Steuereinrichtung ausgelesen und über die Sendeeinrichtung im Rahmen des akustischen Signals ausgesendet werden. Für eine einfache, billige und trotzdem effiziente Ausgestaltung der tragbaren Sendevorrichtung gemäß der vorliegenden Erfindung sind diese Funktionen zur Verwendung mit dem erfindungsgemäßen Kommunikationssystem zur Kontrolle der Zugriffsberechtigung eines Benutzers völlig ausreichend.

Bei der in Figur 3 gezeigten bevorzugten Ausführungsform der erfindungsgemäßen tragbaren Sendevorrichtung 30 besteht das akustische Signal aus zwei Teilen, wobei erst der zweite Teil die Ientifizierungsinformation und ggf. die mit der Identität des Benutzers in Zusammenhang stehende Identitätsinformation umfaßt. Der erste Teil des akustischen Signals enthält eine Adresseninformation, die die Identifizierungsinformation und ggf. die Identitätsinformation von der Empfangseinrichtung 21 zur Überprüfungseinrichtung 22 des Empfangssystems leitet, wie z.B. eine Telefonnummer oder eine Internetadresse. Das ist insbesondere für den Fall wichtig, daß die Verbindung zwischen der Empfangseinrichtung 21 und der Überprüfungseinrichtung 22 des Empfangssystems keine exklusive Verbindung ist, sondern von verschiedensten Benutzern benutzt wird, wie z.B. ein Telefon-Festleitungsnetz, schnurloses Telefonnetz, Internet usw. Im Folgenden wird die tragbare Sendevorrichtung 30 von Figur 2 hinsichtlich einer Übertragung über ein Telefon-Festleitungsnetz erläutert, wobei diese Erläuterungen jedoch sinngemäß auch auf die anderen Übertragungsmöglichkeiten anzuwenden sind.

Wie oben erwähnt, besteht der erste Teil des von der tragbaren Sendevorrichtung 30 zur Empfangseinrichtung 21 übertragenen akustischen Signals aus der Telefonnummer des Systems, zu dem der Benutzer Zugang erlangen möchte. Die Überprüfungseinrichtung 22 ist dabei Teil dieses Systems und sozusagen über diese Telefonnummer erreichbar.

Die Telefonnummer ist dabei im Speicher 32 der Steuereinrichtung 31 abgelegt. Bei Betätigung der Auslöseeinrichtung 34 durch den Benutzer liest die Steuerungseinrichtung 31 die Telefonnummer aus dem Speicher 32 aus und leitet sie zur Signalerzeugungseinrichtung 35. Die Signalerzeugungseinrichtung 35 setzt die Telefonnummer gemäß dem Mehrfrequenzverfahren in ein akustisches Signal um, das von der Sendeeinrichtung 33 ausgesendet wird. Dieser erste Teil des akustischen Signals wird von der Empfangseinrichtung 21, die beispielsweise durch die Sprechermuschel (Mikrofon) eines Telefonhörers gebildet ist, zu einer Vermittlungsstelle des Telefon-Festnetzes weitergeleitet. Die Vermittlungsstelle identifiziert die Adresse anhand der empfangenen Telefonnummer und leitet dann den zweiten Teil des akustischen Signals zur Überprüfungseinrichtung 23 weiter. Die tragbare Sendevorrichtung 30 hat dabei vorzugsweise die Form und Größe einer Scheckkarte, eines Schlüsselanhängers oder dergleichen, wodurch sie leicht aufzubewahren und einfach mit sich zu führen ist. Zur Bedienung wird die tragbare Sendevorrichtung 30 einfach an die Empfangseinrichtung 21, beispielsweise ein Mikrofon oder ein Telefonhörer, gehalten, wonach der Benutzer durch Betätigung der Auslöseeinrichtung 34, wie z.B. einer Taste, eines Drucksensors oder dergleichen, die Erzeugung und Versendung des akustischen Signals startet. Dabei kann die Auslöseeinrichtung 34 mehrere derartige Tasten oder Drucksensoren umfassen, so daß Zugriff bzw. Zugang zu verschiedenen Systemen möglich ist. Jeder Taste bzw. jedem Drucksensor ist dabei ein eigenes akustisches Signal zugeordnet. Beispielsweise können die verschiedenen Tasten bzw. Drucksensoren jeweils verschiedene Aufgaben innerhalb des gleichen Systems zugeordnet sein, wobei in diesem Fall der erste Teil des akustischen Signals, d.h. beispielsweise die Telefonnummer übereinstimmt, oder jeder Taste bzw. jedem Drucksensor kann ein unterschiedliches System mit jeweils einer eigenen Telefonnummer zugeordnet sein.

Zur Verhinderung von Fehlauslösungen und damit verbundenem unnötigen Energieverbrauch kann die Auslöseeinrichtung 34 mit einer Fotodiode derart gekoppelt sein, daß die Auslöseeinrichtung 34 bei Dunkelheit nicht aktiv ist. Erst wenn die Fotodiode eine ausreichende Lichtstärke feststellt, kann die Erzeugung und Versendung des akustischen Signals über die Auslöseeinrichtung 14 aktiviert werden. Wenn die Auslöseeinrichtung 34 mehrere Tasten bzw. Drucksensoren umfaßt, sollte bei Betätigung mehrerer Tasten bzw. Drucksensoren gleichzeitig ebenfalls keine Aktivierung möglich sein.

Nach Übersendung des ersten Teils des akustischen Signals wird nach einer vorbestimmten Pause der zweite Teil des akustischen Signals mit der Identifizierungs- und ggf. der Identitätsinformation versendet. Aus Sicherheitsgründen sind die Identifizierungs- und ggf. die Identitätsinformation dabei in einem eigenen Speicher 38, der an die Signalerzeugungseinrichtung 35 gekoppelt ist, abgespeichert. Wie oben in Bezug auf Figur 2 näher erläutert, besteht die Identitätsinformation entweder aus den Benutzer direkt charakterisierenden Daten, wie z.B. Sprachparametern oder Sprecherparameter, oder aus den Benutzer indirekt charakterisierenden Daten, wie z.B. Adreßinformationen einer Datenbank der Überprüfungseinrichtung 22 des Empfangssystems 20, einer Kundennummer, einer Gerätenummer oder dergleichen. Beim oben genannten Beispiel einer Telefon-Festnetzleitung zwischen der Empfangseinrichtung 21 und der Überprüfungseinrichtung 22 wird auch der zweite Teil des akustischen Signals in Form von Mehrfrequenztönen von der Signalerzeugungseinrichtung 35 erzeugt und von der Sendeeinrichtung 33 ausgesendet.

Zur Erhöhung der Sicherheit ist der zweite Teil des akustischen Signals im in Figur 3 dargestellten Beispiel verschlüsselt. Der verwendete Schlüssel ist dabei in der Speichereinrichtung 32 gespeichert, und zwar zusammen mit der zugehörigen Adreßinformation oder dergleichen des ersten Teils des akustischen Signals und der im zweiten Teil des akustischen Signals zu übertragenden Identifizierungsinformation und ggf. der Identitätsinformation.

Zur weiteren Erhöhung der Sicherheit kann der zweite Teil des akustischen Signals, das von der tragbaren Sendevorrichtung 30 ausgesendet wird, neben der Identifizierungs- und ggf. der Identitätsinformation eine veränderbare Sicherheitsinformation umfassen, die sich bei jedem Sendevorgang ändert. Auch die Sicherheitsinformation wird mit dem gleichen Schlüssel verschlüsselt wie die Identifizierungs- und ggf. die Identitätsinformation. Die Veränderung der Sicherheitsinformation kann beispielsweise auf der Basis der in einem Vorgangszähler 39 gezählten Sendevorgänge erfolgen. Der Vorgangszähler 39 zählt hierbei jeden Sendevorgang. Die akkumulierte Zahl der Sendevorgänge wird daraufhin verschlüsselt und als Sicherheitsinformation der Identifizierungsinformation hinzugefügt. Alternativ kann die Sicherheitsinformation auf der Basis eines Echtzeitzählers in der tragbaren Sendevorrichtung 30 erzeugt werden, d.h. die jeweilige Echtzeitinformation wird zur Bereitstellung der Sicherheitsinformation verwendet. Bei beiden Möglichkeiten kann dabei auf einfache Weise gewährleistet werden, daß auch das System 20 über die gleiche Sicherheitsinformation verfügt, da dort ebenfalls in der Überprüfungseinrichtung 22 ein Vorgangszähler bzw. eine Echtzeituhr vorgesehen sein können, so daß die Überprüfungseinrichtung 22 die Richtigkeit der Sicherheitsinformation leicht überprüfen kann. Falls die Sicherheitsinformation auf der Zahl der Sendevorgänge basiert, wird in der Überprüfungseinrichtung 22 überprüft, ob die empfangene Zahl der Sendevorgänge von der tragbaren Sendevorrichtung 30 größer oder gleich der vom Vorgangszähler der Überprüfungseinrichtung 22 gezählten Empfangsvorgänge ist. Falls die empfangene Zahl der Sendevorgänge von der tragbaren Sendevorrichtung größer oder gleich der vom Vorgangszähler der Überprüfungseinrichtung 22 gezählten Empfangsvorgänge ist, so wird die Sicherheitsinformation als gültig erkannt und der Zugriff kann entsprechend freigegeben werden. Durch diese Maßnahme wird sichergestellt, daß ein versehentliches Auslösen eines Sendevorganges an der tragbaren Sendevorrichtung und eine entsprechende Erhöhung der Vorgangszahl im Vorgangszähler der tragbaren Sendevorrichtung keine negativen Auswirkungen auf die erfindungsgemäße Überprüfung der Zugriffsberechtigung hat.

Die in der tragbaren Sendevorrichtung 30 realisierten erfindungsgemäßen Funktionen können beispielsweise durch einen Mikrocontroller als Speichereinrichtung 32 und einen Tongenerator sowie entsprechende Speichereinrichtungen realisiert werden. Dabei kann beispielsweise der Speicher 32, in dem die Adreßinformation des ersten Teils des akustischen Signals und der entsprechende Schlüssel gespeichert sind, Teil des Mikrocontrollers sein. Der separate Speicher 38 kann in diesem Fall beispielsweise gemeinsam mit der Signalerzeugungseinrichtung 35 in einem Tonmodul realisiert sein. Alternativ dazu können die gesamten Funktionen in einem speziellen Halbleiterchip realisiert werden.

Die Verwendung zweier getrennter Speicher 32 und 38 für die Adresseninformation, z.B. Rufnummer oder dergleichen, und Schlüssel einerseits und die Identitätsinformation, die auf der Basis des Schlüssels verschlüsselt wird, andererseits, gewährleistet ein hohes Maß an Sicherheit, da die Daten überhaupt nicht oder nur sehr schwer ausgelesen werden können. Da jede tragbare Sendevorrichtung 30 von einem einzigen Benutzer verwendet und diesem persönlich zugeordnet werden soll, muß die tragbare Sendevorrichtung 30 vor der Inbetriebnahme personalisiert werden. Das bedeutet, daß die erfindungsgemäße tragbare Sendevorrichtung 30 vorteilhafterweise so ausgelegt werden soll, daß der die Identitätsinformation enthaltende Speicher 38 über einen Adapter mit handelsüblichen Programmiergeräten, beispielsweise für smart cards, personalisiert werden kann. Dem Programmiergerät gegenüber verhält sich die Speichervorrichtung 30 wie eine einfache Speicherkarte mit I²C-Interface, wobei sie den bidirektionalen 2-Draht-Bus I²C unterstützt. Dabei arbeitet die erfindungsgemäße tragbare Sendevorrichtung immer als Slave und kann nur der Empfänger von Daten sein. Die Daten werden dabei von einem Master kontrolliert, der den Takt für die serielle Übertragung und die Start- und Stop-Signale erzeugt. Ein Auslesen von Daten aus dem Speicher 38 von außen ist somit nicht ohne weiteres möglich.

Im Gegensatz dazu sind die Daten, die im Speicher 32 der Steuerungseinrichtung 31 gespeichert sind, Daten, die für viele Sendevorrichtungen 30 identisch sind, nämlich die Adresseninformation, beispielsweise Rufnummer, und der für den zweiten Teil des akustischen Signals zu verwendende Schlüssel für das Empfangssystem 20. Diese Daten werden, falls die Steuerungseinrichtung 31 ein Mikrocontroller mit einem EPROM als Speicher ist, bei der Programmierung des Mikrocontrollers in das EPROM geschrieben. Nach dem Programmieren wird der Zugriff auf das EPROM gesperrt.

Hierbei ist es wichtig, daß der gespeicherte Schlüssel sehr gut gegen Angriffe geschützt ist. Das kann beispielsweise durch Aufspalten des Schlüssels in kleinere Teile und durch Verteilen der Teile im Speicher gewährleistet werden. Das unauthorisierte Zusammensetzen des Schlüssels kann hierbei durch Zeiger, indirekte Sprünge und unsinnig eingeschobene Datenbereiche erschwert werden.

Da die erfindungsgemäße tragbare Sendevorrichtung 30 vorteilhafterweise in Form und Größe einer Kreditkarte, eines Schlüsselanhängers oder dergleichen ausgebildet sein soll, sollten die verwendeten Elemente möglichst klein und leicht sein. Als Sendeeinrichtung 33 kann dabei beispielsweise ein Piezolautsprecher verwendet werden, für dessen akustische Abstrahlfläche ein Kreis mit einem Durchmesser von ca. 35 mm ausreichend ist. Die Taktversorgung durch den Takterzeuger 36 erfolgt vorteilhafterweise durch einen kleinen Uhrenquarz, wobei hier die minimale Dicke des Quarzes wichtigstes Auswahlkriterium ist. Die Batterie 37 muß die als Blockschaltbild in Figur 3 dargestellte Schaltung ca. 3 Sekunden lang mit Strom bei 3 Volt versorgen. In den Ruhezeiten schaltet die Elektronik automatisch in einen Standby-Zustand. Die Kapazität der Batterie soll etwa eine tausendmalige Benutzung innerhalb von 3 Jahren garantieren, so daß beispielsweise eine 3V-Knopfzelle mit einer maximalen Höhe von 1,2 bis 1,6 mm verwendet werden kann. Eine derartige Batterie kann fest eingebaut werden und gewährleistet dabei eine zuverlässige Spannungsversorgung während der gesamten Lebenszeit der Sendevorrichtung.

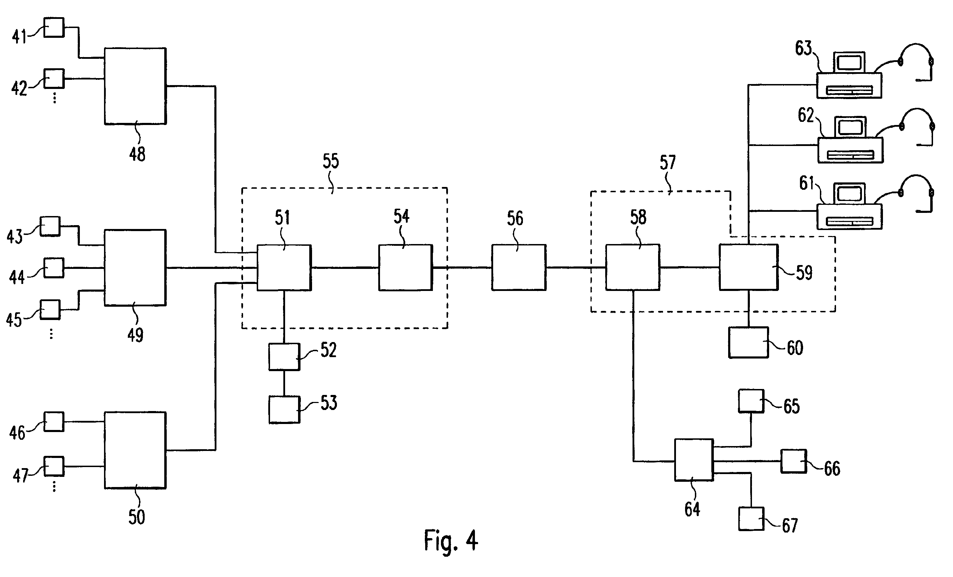

In Figur 4 ist schematisch eine vorzugsweise Ausgestaltung eines erfindungsgemäßen Kommunikationssystems zur aufgabenabhängigen Bereitstellung von Informationen dargestellt. Die dargestellt Ausgestaltung, bezieht sich beispielsweise auf ein Callcenter einer Fluggesellschaft, das verschiedenen Kundengruppen verschiedene Informationen abhängig von einer jeweils für eine Kundengruppe vordefinierten Aufgabe bereitstellt. Die verschiedenen Kundengruppen sind beispielsweise die Öffentlichkeit, Gelegenheitsflieger, regelmäßig reisende und Teilnehmer eines Vielfliegerprogrammes sowie besondere Zielgruppen. Jeder Kundengruppe wird eine Aufgaben-Identifizierungsnummer zugeteilt, die sie entweder über die Tastaturen von Festnetz-Telefonendgeräten, von Mobiltelefonen und dergleichen eingeben. Eine andere Möglichkeit der Eingabe der Aufgaben-Identifizierungsnummer ist beispielsweise die Eingabe über eine tragbare Sendevorrichtung 30, wie sie unter Bezug auf die Figuren 2 und 3 erläutert wurde.

Im in Figur 4 gezeigten Beispiel sind mehrere Empfangseinrichtungen 41-47 vorgesehen, die beispielsweise durch Festnetz-Telefonendgeräte, Mobiltelefone usw. gebildet sein können. Die beiden Empfangseinrichtungen 41 und 42 sind mit einem Telefoncomputer 48 verbunden, die Empfangseinrichtungen 43-45 sind mit einem zweiten Telefoncomputer 49 verbunden und die Empfangseinrichtungen 46 und 47 sind mit einem dritten Telefoncomputer 50 verbunden. Die Empfangseinrichtungen 41 bis 47, die im gezeigten Beispiel durch Telefone gebildet sind, vereinigen somit die Funktionen der Empfangseinrichtung 1 und der Ausgabeeinrichtung 4 des in Figur 1 gezeigten Kommunikationssystems. Die Telefoncomputer 48, 49 und 50 vereinigen in sich jeweils die Funktionen der Dekodiereinrichtung 2, der Überprüfungseinrichtung 3 und der Sprachsignal-Erzeugungseinrichtung 7 des in Figur 1 gezeigten Kommunikationssystems. Zur Erläuterung der entsprechenden Funktionen wird auf die entsprechenden Erläuterungen zur Figur 1 verwiesen. Die drei Telefoncomputer 48, 49 und 50 sind über ein sogenanntes Switching-Hub 51 mit einem Kommunikationsnetz 55, wie beispielsweise dem Internet oder einem Wide Area Network verbunden. Das Switching-Hub 51 verbindet die drei Telefoncomputer 48, 49 und 50 weiterhin mit einer Verarbeitungseinrichtung 52, die wiederum mit einem Datenserver 53 verbunden ist. Die Verarbeitungseinrichtung 52 entspricht in ihren Funktionen der Verarbeitungseinrichtung 8 des in Figur 1 gezeigten Kommunikationssystems und dient zum Abrufen von Informationen aus einer oder mehreren Daten von über die Telefoncomputer 48, 49 und 50 empfangenen Aufgaben-Identifizierungsinformationen. Die Verarbeitungseinrichtung 52 steuert die Bereitstellung der jeweils zugeordneten Informationen von den entsprechenden Datenquellen mittels einer entsprechenden Abfrage bei den Datenquellen. Im gezeigten Beispiel setzt die Verarbeitungseinrichtung 52 beispielsweise eine empfangene Aufgaben-Identifizierungsinformation mit einer Adresseninformation versieht oder auf der Basis der in der Aufgaben-Identifizierungsinformation bereits enthaltenen Adreßinformation über entsprechende Router 54, 56 und 58 zu einem Local Area Network 57 weiterleitet, in dem die Datenquellen beispielsweise als Datenserver 60 und als Computer 61, 62 und 63 mit Kundenbetreuer zur Verfügung stehen. Im Datenserver 53, der mit der Verarbeitungseinrichtung 52 verbunden ist, werden beispielsweise Verwaltungsdaten, wie z.B. Adreßinformationen oder auch eine Begrüßungsansage gespeichert.

Das Local Area Network 57 umfaßt das gesamte Telefonsystem der Fluggesellschaft mit Router 58, Switching-Hub 59, der das Local Area Network mit dem Datenserver 60 und den Computern 61, 62 und 63 verbindet, sowie eine Nebenstellenanlage 64 mit entsprechend angeschlossenen Telefonen 65, 66 und 67. Im Datenserver 60 können beispielsweise Sprachdaten, Bilddaten oder Textdaten (vgl. Speichereinrichtungen 14, 15 und 16 von Figur 1) gespeichert sein und einem anrufenden Kunden abhängig von der zugeordneten Aufgabe ausgegeben werden. Die Computer 61, 62 und 63 mit Sprachkarte und Telefonfunktion entsprechen in ihrer Funktion beispielsweise der Empfangseinrichtung 13 und Umwandlungseinrichtung 12 des Kommunikationssystems von Figur 1. Beim Dialog mit dem Kunden wird das Sprachsignal des Kundenbetreuers über den jeweiligen Computer 61, 62 oder 63 in digitale Sprachdaten umgewandelt, und dem Kunden über das Kommunikationsnetz 55 übertragen und als akustische Sprachsignale ausgegeben.

Im folgenden werden verschiedene Abläufe zur Bereitstellung von Informationen abhängig von einer zugeordneten Aufgabe für das in Figur 4 dargestellte Kommunikationssystem am Beispiel einer Fluggesellschaft erläutert. Die verschiedenen vordefinierten Kundengruppen sind die Öffentlichkeit, Gelegenheitsflieger, regelmäßig Reisende und Teilnehmer eines Vielfliegerprogrammes.

Der Öffentlichkeit wird eine Aufgaben-Identifizierungsnummer für die Aufgabe "Öffentlichkeit informieren" zugänglich gemacht, z.B. über Presse, Funk oder Fernsehen, d.h. die Aufgaben-Identifizierungsinformation wird als Telefonnummer öffentlich bekanntgemacht. Dabei wird für die Aufgabe "Öffentlichkeit informieren" der folgende starre Prozeß durchlaufen:
1. Rufe eine Ansage ab für die unpersönliche Begrüßung
2. Führe einen automatischen Dialog mit Spracherkennung durch für eine Vorentscheidung
3. Ordne den Informationswunsch der entsprechenden Warteschlange mit niedriger Priorität zu
4. Rufe allgemeine Ansagen und Wartemusik für eine Warteschleife ab
5. Übertrage die Information "Öffentlichkeit" auf den Bildschirm des Kundenbetreuers
6. Regeneriere aus den Daten vom Computer des Kundenbetreuers dessen Sprache und konvertiere die Sprache des Anrufers
7. Rufe eine Ansage ab für die unpersönliche Verabschiedung

Die Aufgaben-Identifizierungsnummer kann in diesem Fall auch spezifisch für eine Werbekampagne verwendet und auf diese Weise gezielt einer bestimmten Kundenansprache zugeordnet werden.

Die Gruppe der Gelegenheitsflieger erhält Kundenkarten, auf denen die einheitliche Aufgaben-Identifizierungsinformation als Telefonnummer für die Aufgabe "Gelegenheitsflieger bedienen" aufgedruckt ist. Bei der Abwicklung der Aufgabe "Gelegenheitsflieger bedienen" wird folgender Prozeß durchlaufen:
1. Rufe eine Ansage ab für die unpersönliche Begrüßung
2. Ordne den Informationswunsch der Warteschlange mit mittlerer Priorität zu
3. Rufe besondere Angebote und Informationen über das Vielfliegerprogramm sowie Wartemusik für eine Warteschleife ab
4. Übertrage die Information "Gelegenheitsflieger" auf den Bildschirm des Kundenbetreuers
5. Regeneriere aus den Daten vom Computer des Kundenbetreuers dessen Sprache und konvertiere die Sprache des Anrufers
6. Rufe eine Ansage ab für die persönliche Verabschiedung

Die Gruppe der regelmäßig Reisenden erhält individuelle Kundenkarten, auf denen eine individuelle Aufgaben-Identifizierungsinformation als Telefonnummer für die Aufgabe "Bediene die Gelegenheitsflieger mit der Kundennummer xyz" aufgedruckt ist. Bei der Abwicklung der Aufgabe wird folgender Prozeß durchlaufen:
1. Rufe eine Ansage ab für die persönliche Begrüßung
2. Ordne den Informationswunsch der Warteschlange mit hoher Priorität zu
3. Rufe den Status (z.B. gebucht oder nicht gebucht) der Kundin aus der Kundendatenbank ab
4. Wenn gebucht: rufe Informationen über die Buchung aus der Flug-Datenbank ab
5. Rufe besondere Angebote und Informationen über das Vielfliegerprogramm sowie Wartemusik für eine Warteschleife ab
6. Übertrage die Information "regelmäßiger Kunde, Name, Kundennummer" auf den Bildschirm des Kundenbetreuers
7. Zeige die Kundengeschichte auf dem Bildschirm an
8. Regeneriere aus den Daten vom Computer des Kundenbetreuers dessen Sprache und konvertiere die Sprache des Anrufers
9. Rufe eine Ansage ab für die persönliche Verabschiedung

Die Teilnehmer in einem Vielfliegerprogramm erhalten eine tragbare Sendevorrichtung, beispielsweise eine tragbare Sendevorrichtung 30, wie sie unter Bezug auf die Figuren 2 und 3 erläutert wurde, für die automatische Erzeugung einer individuellen Aufgaben-Identifizierungsinformation für die Aufgabe "Bediene den n-ten Kontaktwunsch des Vielfliegers mit der Kundennummer abc". Die Abwicklung der Aufgabe erfolgt durch folgenden Prozeß:
1. Ansage über die persönliche Begrüßung abrufen und wiedergeben
2. Informationswunsch der Warteschlange mit höchster Priorität zuordnen
3. Kundenstatus (gebucht oder nicht gebucht) aus der Kunden-Datenbank abrufen und wiedergeben
4. Wenn gebucht: Informationen über die Buchung aus der Flug-Datenbank abrufen und wiedergeben
5. Informationen über das Meilenkonto des Kunden abrufen und wiedergeben
6. Wartemusik für eine Warteschleife abrufen und wiedergeben
7. Information "Vielflieger, Name, Kundennummer" auf den Bildschirm des Kundenbetreuers übertragen
8. Kundengeschichte am Bildschirm anzeigen
9. Sprache des Kundenbetreuers regenerieren aus den Daten von seinem Computer und Sprache des Anrufers konvertieren
10. Ansage für die persönliche Verabschiedung abrufen und wiedergeben.

Die Datenquellen können dabei an verschiedenen Orten vom Informationsanbieter bereitgestellt werden. Beispielsweise kann die Kunden-Datenbank in der deutschen Kundenberatungszentrale, und die Flug-Datenbank in einem internationalen Logistikzentrum der Fluggesellschaft bereitgestellt werden. Die Kundenbetreuer können in Abhängigkeit von Uhrzeit und verlangten Fähigkeiten (beispielsweise Sprache) an verschiedenen Orten der Welt sitzen. Das besondere an dieser Art der Vermittlung ist, daß zu jeder Aufgaben-Identifizierungsinformation in dem Vermittlungsrechner (Verarbeitungseinrichtung) individuelle Abläufe programmiert werden können, die unterschiedlich und beliebig komplex sein können. Für die Information der Öffentlichkeit können sehr starr und einfach bereits fertige Texte zum Vorlesen bereitgestellt werden, während für den Vielflieger mit den meisten Meilen ein sehr individuell zugeschnittener Informationsablauf programmiert werden kann.

## Patentansprüche

1. Kommunikationssystem zur aufgabenabhängigen Bereitstellung von Informationen, mit
einer Anzahl von Datenquellen (10-19) zum Bereitstellen von Informationen verschiedener Datenformate,
einer Empfangseinrichtung (1, 21) zum Empfangen von Identifizierungsinformationen, die eine jeweilige den bereitzustellenden Informationen zugeordnete Aufgabe identifizieren,
Verarbeitungseinrichtung (8) zum Abrufen von Informationen aus einer oder mehreren der Datenquellen (10-19) abhängig von der einer empfangenen Identifizierungsinformation zugeordneten Aufgabe, und
einer Ausgabeeinrichtung (4) zum Ausgeben von die abgerufenen Informationen enthaltenden akustischen Sprachsignalen.

2. Kommunikationssystem zur aufgabenabhängigen Bereitstellung von Informationen gemäß Anspruch 1,
**dadurch gekennzeichnet,**
daß die Verarbeitungseinrichtung (8), die Empfangseinrichtung (1, 21), die Ausgabeeinrichtung (4) und die Datenquellen (10-19) zumindest teilweise durch ein Kommunikationsnetz (9) zur paketvermittelten Übertragung von Informationen verbunden sind.

3. Kommunikationssystem zur aufgabenabhängigen Bereitstellung von Informationen gemäß Anspruch 1 oder 2,
**gekennzeichnet durch**
eine Sprachsignal-Erzeugungseinrichtung (7), die Sprachsignale aus den von den Datenquellen (10-19) abgerufenen Informationen erzeugt und der Ausgabeeinrichtung (4) zuführt, wobei die erzeugten Sprachsignale in der Ausgabeeinrichtung (4) durch eine elektroakustische Umwandlung in akustische Sprachsignale umgewandelt und ausgegeben werden.

4. Kommunikationssystem zur aufgabenabhängigen Bereitstellung von Informationen gemäß Anspruch 3,
**dadurch gekennzeichnet,**
daß die Sprachsignal-Erzeugungseinrichtung (7) und die Ausgabeeinrichtung (4) durch eine Telefonanlage verbunden sind und die Ausgabeeinrichtung (4) durch ein Endgerät der Telefonanlage gebildet ist.

5. Kommunikationssystem zur aufgabenabhängigen Bereitstellung von Informationen gemäß Anspruch 3,
**dadurch gekennzeichnet,**
daß die Sprachsignal-Erzeugungseinrichtung (7) und die Ausgabeeinrichtung (4) durch ein leitungsvermitteltes Telefonnetz verbunden sind und die Ausgabeeinrichtung (4) durch ein Endgerät des Telefonnetzes gebildet ist.

6. Kommunikationssystem zur aufgabenabhängigen Bereitstellung von Informationen gemäß einem der Ansprüche 1 bis 5,
**dadurch gekennzeichnet,**
daß zumindest eine Datenquelle (10, 11; 12, 13; 14) die abzurufenden Informationen als Sprachdaten bereitstellt.

7. Kommunikationssystem zur aufgabenabhängigen Bereitstellung von Informationen gemäß Anspruch 6,
**dadurch gekennzeichnet,**
daß zumindest eine der Datenquellen (14) eine Speichereinrichtung umfaßt, in der die Sprachdaten in digitaler Form gespeichert sind.

8. Kommunikationssystem zur aufgabenabhängigen Bereitstellung von Informationen gemäß Anspruch 6 oder 7,
**dadurch gekennzeichnet,**
daß zumindest eine der Datenquellen eine Empfangseinrichtung (13) zum Empfang akustischer Sprachsignale von einem Sprecher und eine Einrichtung (12) zur direkten Umwandlung der empfangenen akustischen Sprachsignale in digitale Sprachdaten umfaßt.

9. Kommunikationssystem zur aufgabenabhängigen Bereitstellung von Informationen gemäß Anspruch 6, 7 oder 8
**dadurch gekennzeichnet,**
daß zumindest eine der Datenquellen eine Empfangseinrichtung (11) zum Empfang akustischer Sprachsignale von einem Sprecher und eine Einrichtung (10) zur indirekten Umwandlung der empfangenen akustischen Sprachsignale in digitale Sprachdaten auf der Basis von Parametern bezüglich des Sprachinhaltes und der Sprachgestaltung umfaßt.

10. Kommunikationssystem zur aufgabenabhängigen Bereitstellung von Informationen gemäß einem der Ansprüche 1 bis 9,
**dadurch gekennzeichnet,**
daß zumindest eine der Datenquellen (15) eine Speichereinrichtung, in der Bilddaten gespeichert sind.

11. Kommunikationssystem zur aufgabenabhängigen Bereitstellung von Informationen gemäß einem der Ansprüche 1 bis 10,
**dadurch gekennzeichnet,**
daß zumindest eine Datenquelle (16; 17; 18; 19) die abzurufenden Informationen als Textdaten bereitstellt.

12. Kommunikationssystem zur aufgabenabhängigen Bereitstellung von Informationen gemäß Anspruch 11,
**dadurch gekennzeichnet,**
daß zumindest eine der Datenquellen (16) eine Speichereinrichtung umfaßt, in der die abzurufenden Informationen als Textdaten gespeichert sind.

13. Kommunikationssystem zur aufgabenabhängigen Bereitstellung von Informationen gemäß Anspruch 11 oder 12,
**dadurch gekennzeichnet,**
daß zumindest eine der Datenquellen (18) e-mail Daten als Textdaten bereitstellt.

14. Kommunikationssystem zur aufgabenabhängigen Bereitstellung von Informationen gemäß Anspruch 11, 12 oder 13,
**dadurch gekennzeichnet,**
daß zumindest eine der Datenquellen (19) Fax-Daten als Textdaten bereitstellt.

15. Kommunikationssystem zur aufgabenabhängigen Bereitstellung von Informationen gemäß einem der Ansprüche 11 bis 14,
**dadurch gekennzeichnet,**
daß zumindest eine der Datenquellen (17) Daten einer website als Textdaten bereitstellt.

16. Kommunikationssystem zur aufgabenabhängigen Bereitstellung von Informationen gemäß einem der Ansprüche 1 bis 15,
**gekennzeichnet durch**
eine Überprüfungseinrichtung (3, 22) zur Überprüfung der von der Empfangseinrichtung (1, 21) empfangenen Identifizierungsinformationen in Bezug auf ihre Aufgabe.

17. Kommunikationssystem zur aufgabenabhängigen Bereitstellung von Informationen gemäß Anspruch 16,
**dadurch gekennzeichnet,**
daß die Überprüfungseinrichtung (3, 22) die jeweilige Aufgabe auf der Basis der empfangenen Identifizierungsinformation identifiziert und mittels eines von der Empfangseinrichtung empfangenen Bestätigungssignales verifiziert.

18. Kommunikationssystem zur aufgabenabhängigen Bereitstellung von Informationen gemäß Anspruch 16,
**dadurch gekennzeichnet,**
daß die Empfangseinrichtung (21) zum Empfangen der Identifizierungsinformationen als akustisches Signal von einer tragbaren Sendevorrichtung (30) und des Bestätigungssignals in Form eines akustischen Sprachsignales von einem Benutzer ausgebildet ist, wobei das akustische Signal von der tragbaren Sendevorrichtung (30) innerhalb der oder zusätzlich zur Identifizierungsinformation eine Identitätsinformation enthält, die mit der Identität des Benutzers in Zusammenhang steht.

19. Kommunikationssystem zur aufgabenabhängigen Bereitstellung von Informationen gemäß Anspruch 16,
**dadurch gekennzeichnet,**
daß die Überprüfungseinrichtung (22) die Identität des Benutzers auf der Basis der empfangenen Identitätsinformation erkennt und mittels des empfangenen akustischen Sprachsignales von dem Benutzer verifiziert.

20. Kommunikationssystem zur aufgabenabhängigen Bereitstellung von Informationen gemäß Anspruch 18 oder 19,
**dadurch gekennzeichnet,**
daß die Identitätsinformation von der tragbaren Sendevorrichtung (30) den Benutzer direkt charakterisierende Daten enthält, die die Überprüfungseinrichtung (22) zur Überprüfung der Identität des Benutzers verwendet.

21. Kommunikationssystem zur aufgabenabhängigen Bereitstellung von Informationen gemäß Anspruch 18 oder 19,
**dadurch gekennzeichnet,**
daß die Identitätsinformation von der tragbaren Sendevorrichtung (30) den Benutzer indirekt charakterisierende Daten enthält, mit denen aus einer Speichereinrichtung (25) den Benutzer direkt charakterisierende Daten ausgelesen werden, die die Überprüfungseinrichtung (22) zur Überprüfung der Identität des Benutzers verwendet.

22. Kommunikationssystem zur aufgabenabhängigen Bereitstellung von Informationen gemäß Anspruch 20 oder 21,
**dadurch gekennzeichnet,**
daß die charakteristischen Daten die Stimme des Benutzers kennzeichnen.

23. Kommunikationssystem zur aufgabenabhängigen Bereitstellung von Informationen gemäß einem der Ansprüche 18 bis 22,
**dadurch gekennzeichnet,**
daß das akustische Signal von der tragbaren Sendevorrichtung (30) verschlüsselt ist, und daß die Überprüfungseinrichtung (22) eine Entschlüsselungseinrichtung (23) zum Entschlüsseln des empfangenen verschlüsselten akustischen Signales umfaßt.

24. Kommunikationssystem zur aufgabenabhängigen Bereitstellung von Informationen gemäß einem der Ansprüche 18 bis 23,
**dadurch gekennzeichnet,**
daß das akustische Signal von der tragbaren Sendevorrichtung (30) gemäß einer der tragbaren Sendevorrichtung (30) und der Überprüfungseinrichtung (22) bekannten Regel geändert wird.

25. Tragbare Sendevorrichtung (30) zur Verwendung mit einem Kommunikationssystem zur aufgabenabhängigen Bereitstellung von Informationen gemäß einem der Ansprüche 18 bis 24, mit
einer Speichereinrichtung (32) zum Speichern der Identifizierungsinformation und ggf. der Identitätsinformation,
einer Sendeeinrichtung (33) zum Senden eines die Identifizierungsinormation und ggf. die Identitätsinformation zumindest teilweise repräsentierenden akustischen Signals, und
einer Auslöseeinrichtung (34), die bei Betätigung durch einen Benutzer das Senden des akustischen Signals auslöst.

26. Tragbare Sendevorrichtung gemäß Anspruch 25,
**dadurch gekennzeichnet,**
daß die Identitätsinformation den Benutzer direkt charakterisierende Daten enthält.

27. Tragbare Sendevorrichtung gemäß Anspruch 25,
**dadurch gekennzeichnet,**
daß die Identitätsinformation den Benutzer indirekt charakterisierende Daten enthält, die den Zugriff auf den Benutzer direkt charakterisierende Daten erlauben.

28. Tragbare Sendevorrichtung gemäß Anspruch 25, 26 oder 27,
**dadurch gekennzeichnet,**
daß das akustische Signal einen ersten und einen zweiten Teil umfaßt, wobei der erste Teil eine Mehrfrequenz-Telefonnummer und der zweite Teil die Identifizierungs- und ggf. die Identitätsinformationen umfaßt.

29. Tragbare Sendevorrichtung gemäß Anspruch 28,
**dadurch gekennzeichnet,**
daß der zweite Teil des akustischen Signals eine veränderbare Sicherheitsinformation umfaßt.

30. Tragbare Sendevorrichtung gemäß Anspruch 29,
**dadurch gekennzeichnet,**
daß ein Vorgangszähler (39) vorgesehen ist, der jeden Sendevorgang zählt, wobei die Sicherheitsinformation auf der Basis der gezählten Sendevorgänge geändert wird.

31. Tragbare Sendevorrichtung gemäß Anspruch 28, 29 oder 30,
**dadurch gekennzeichnet,**
daß eine Verschlüsselungseinrichtung vorgesehen ist, die den zweiten Teil des akustischen Signals verschlüsselt.
